# EUROPÄISCHE PATENTSCHRIFT

(11) **EP 2 363 317 B1**
(45) Veröffentlichungstag und Bekanntmachung des Hinweises auf die Patenterteilung: **02.11.2016**
(21) Anmeldenummer: 11155474.7
(22) Anmeldetag: 22.02.2011
(51) Int. Cl.: B60N 2/225, F16D 41/10, F16D 41/064, B60N 2/22, B60N 2/44, H02K 7/108, E05F 11/50

(54) **Klemmrollenfreilauf für eine Verstellvorrichtung in einem Kraftfahrzeug**
Clamp roller free wheel for an adjustment device in a motor vehicle
Roue libre de galet de serrage pour un dispositif de réglage dans un véhicule automobile

(30) Priorität: 24.02.2010 DE 102010002314; 08.07.2010 DE 102010031133
(43) Veröffentlichungstag der Anmeldung: 07.09.2011
(73) Patentinhaber: Johnson Controls Metals and Mechanisms GmbH & Co. KG, 42699 Solingen (DE)
(72) Erfinder: Karthaus, Ulrich, 42899, Remscheid (DE)
(74) Vertreter: Bauer, Wulf

(56) Entgegenhaltungen:
- EP-A1- 1 101 967
- DE-A1- 10 104 591
- DE-A1- 19 750 260
- DE-A1- 19 854 931
- DE-A1-102005 018 148
- US-B1- 6 288 464

## Beschreibung

Die Erfindung bezieht sich auf einen Klemmrollenfreilauf nach dem Oberbegriff des Anspruchs 1.

Ein derartiger Klemmrollenfreilauf ist aus der US 6 288 464 B1 bekannt. Derartige Klemmrollenfreiläufe werden vorzugsweise für Schrittschaltvorrichtungen eingesetzt, wie sie beispielsweise aus EP 1 152 168 B1 und DE 195 40 631 C2 bekannt sind.

Zum weiteren Stand der Technik wird auf die EP 497 007 B1 verwiesen, bei ihr liegen sind Klemmschrägen jedoch am Gehäuse und nicht am Klemmelement angeordnet. Das Klemmelement hat eine zylindrische Außenfläche. Zudem wird auf die DE 10 2009 028 213 A1 verwiesen.

Bei derartigen Klemmrollenfreiläufen wünscht man ein möglichst hohes Sperrmoment, es soll größer als 60 Nm sein, wobei die Hertz'sche Pressung berücksichtigt ist. Das Mindestbruchmoment soll über 200 Nm liegen. Ziel ist es auch, dass im Verlauf über den Drehwinkel das Sperrmoment zunächst eine kleinere Steigung aufweist und anschließend, oberhalb eines gewissen Drehwinkels, eine höhere Steigung aufweist. Oberhalb eines weiteren Drehwinkels soll die Klemmung möglichst hoch und konstant gehalten werden, bevor permanente Deformationen und Zerstörungen eintreten.

Der vorbekannte Klemmrollenfreilauf hat n Rollen. Die Hälfte hiervon ist für eine Drehrichtung zuständig, die andere Hälfte für die andere Drehrichtung. Das Sperrmoment in einer Richtung wird daher nur von der Hälfte n/2 der Rollen bewirkt. Die andere Hälfte der Rollen ist dabei passiv. Um das Sperrmoment zu erhöhen, könnte man die Anzahl n der Rollen im Klemmrollenfreilauf vergrößern. Nun möchte man aber nicht die Abmessungen des Klemmrollenfreilaufs erhöhen. Der Platz im Klemmrollenfreilauf ist beschränkt.

Hier setzt nun die Erfindung ein. Sie hat es sich zur Aufgabe gemacht, das Sperrmoment eines Klemmrollenfreilaufs wie demjenigen der eingangs genannten Art zu verbessern und zu erhöhen, dies unter Beibehaltung der Größe des Klemmrollenfreilaufs und möglichst auch ohne weitere, zusätzliche Bauelemente bzw. kostenaufwendige Vorkehrungen.

Diese Aufgabe wird gelöst durch ein Klemmrollenfreilauf mit den Merkmalen des Patentanspruchs 1.

Bei diesem Klemmrollenfreilauf sind jeder einzelnen Rolle zwei Klemmschrägen zugeordnet. Diese sind gegenläufig. Sie stehen V-förmig zueinander. Jede einzelne Rolle kann mit jeder ihrer beiden Klemmschrägen zusammenwirken. Dadurch kann sie in beiden Klemmrichtungen wirken.

Der erfindungsgemäße Klemmrollenfreilauf hat den Vorteil, dass er zunächst wie der Klemmrollenfreilauf nach dem Stand der Technik wirkt, wenn er in den Klemmzustand kommt. Erfolgt am Ritzel eine Drehbewegung, gehen zunächst die Rollen, nämlich 50% der Gesamtzahl n der Rollen, in Klemmung bzw. Klemmstellung, die in Kontakt mit derjenigen Klemmschräge ihrer beiden Klemmschrägen sind, die in der Klemmrichtung sperrt. In der Ausgangslage liegen die beiden Rollen eines Rollenpaars an derjenigen ihrer beiden Klemmschrägen an, die am weitesten voneinander entfernt sind.

Erfolgt nun am Ritzel ein weiteres Drehen um einen gewissen Winkel, kommen auch die anderen Rollen in Klemmstellung. Hierbei überträgt der Käfig die Relativbewegung der bereits klemmenden Rolle des Rollenpaars auf die andere Rolle des Rollenpaars. Bei größeren Momenten, insbesondere im Crashfall, geraten daher über die erfindungsgemäße Doppelklemmkontur beide Rollen eines Rollen-paars in Klemmung. Da nun sehr hohe Spreizkräfte auf das Gehäuse einwirken, erfolgt vorzugsweise nach einem vorgegebenen weiteren Drehwinkel eine Begrenzung.

Der erfindungsgemäße Klemmrollenfreilauf arbeitet daher in zwei aufeinanderfolgenden Winkelbereichen. Im ersten Winkelbereich arbeitet er nach dem Stand der Technik, die auftretenden Momente werden ohne bleibende Verformungen aufgenommen. Bei höheren Belastungen, wie beispielsweise bei einem Crash, werden mit Erreichen des zweiten Winkelbereichs auch die Rollen der anderen Drehrichtung den bereits in Klemmung befindlichen Rollen zugeschaltet, wodurch ein nun höheres Sperrmoment entsteht. Dies wird durch die Doppelklemmkontur erreicht. Jede der Rollen liegt prismatisch zwischen einer linken Klemmschräge und einer rechten Klemmschräge. Die Rollen selbst befinden sich in einem Käfig und werden vorzugsweise durch Distanzstücke in einer Vorzugslage gehalten, so dass für jede Drehrichtung ein sofortiges Klemmen eintritt. Es kann vollständige Spielfreiheit erreicht werden, wenn die Distanzstücke elastisch oder zumindest teilweise elastisch ausgebildet sind.

In einer bevorzugten Weiterbildung hat der Klemmrollenfreilauf zudem ein Löserad, das zentrisch zur Achse ist und hat weiterhin eine Mitnehmereinrichtung, die zwischen dem Löserad und dem Käfig angeordnet ist. Über das Löserad kann von außen ein Drehmoment für den Antrieb eingeleitet werden, das dann am Ritzel abgegriffen werden kann. Durch die Mitnehmereinrichtung wird bewirkt, dass letztendlich eine Drehung am Löserad auch ein Drehen des Käfigs bewirkt und umgekehrt. Die Mitnehmereinrichtung hat vorzugsweise einen Mitnehmerfreiwinkel a, dies bedeutet, dass eine Drehung des Löserads erst dann auf den Käfig übertragen wird, wenn das Löserad um den Mitnehmerfreiwinkel gedreht ist und umgekehrt.

In weiterer vorteilhafter Weiterbildung hat der Klemmrollenfreilauf zudem eine Übertragungseinrichtung, die zwischen Löserad und Ritzel vorgesehen ist. Sie bewirkt letztendlich, dass Löserad und Ritzel drehbar miteinander verbunden sind. Sie hat vorzugsweise einen Übertragungsfreiwinkel b, der bewirkt, dass eine Drehbewegung am Löserad erst auf das Ritzel übertragen wird, wenn der Übertragungsfreiwinkel b aufgezehrt ist und umgekehrt.

Vorzugsweise haben die Mitnehmereinrichtung und die Übertragungseinrichtung Kupplungselemente. Beispielsweise hat der Käfig Zapfen und hat das Löserad Fenster. Die Zapfen greifen in die Fenster ein. Zwischen Zapfen und Fenster ist in Umfangsrichtung der Freiwinkel ausgebildet. Für die Übertragungseinrichtung ist es vorzugsweise so, dass das Ritzel mit einem Keilwellenprofil verbunden ist, das in eine zentrale Öffnung des Löserades hineingreift. Diese hat Anschlagsflächen für das Keilwellenprofil, wobei wiederum der Freiwinkel berücksichtigt ist. Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung nun beschrieben wird. In dieser Zeichnung zeigen:

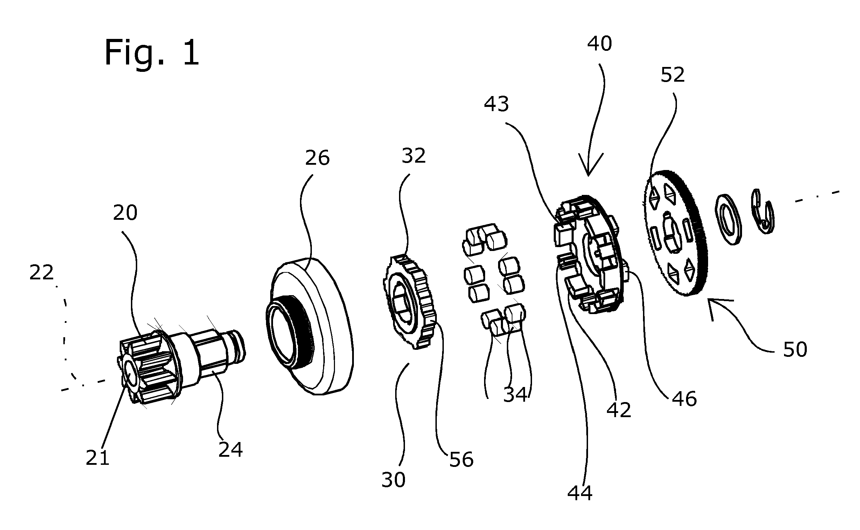

- Fig. 1:: ein perspektivisches Montagebild des Klemmrollenfreilaufs,

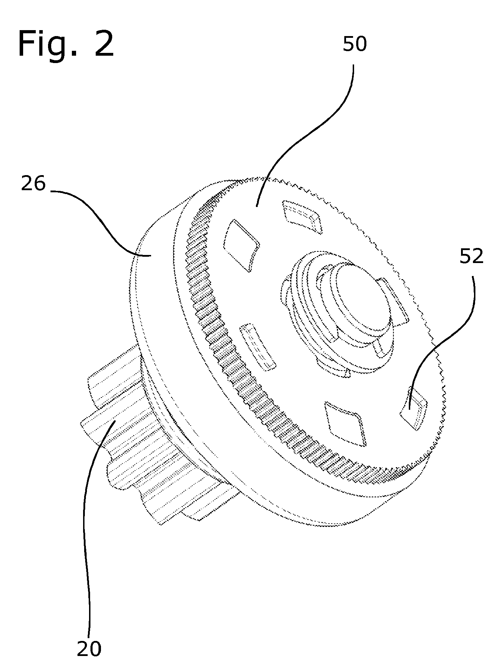

- Fig. 2:: eine perspektivische Darstellung des Klemmrollenfreilaufs bei Ansicht von schräg hinten auf das Löserad,
- Fig. 3:: eine Schnittdarstellung bei radialer Schnittebene und stark vergrößert herausgenommen eines Details mit einem Rollenpaar und den unmittelbar umgebenden Bauteilen, und

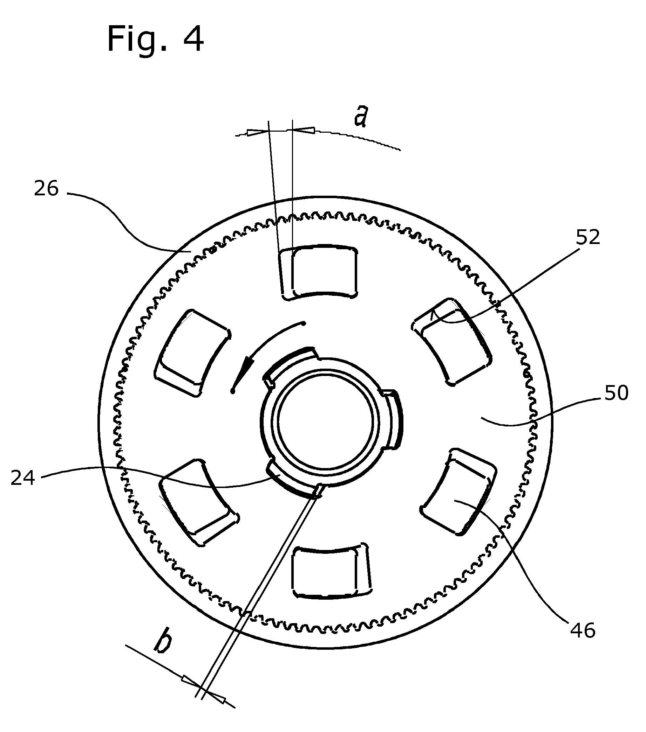

- Fig. 4:: eine axiale Sicht auf den Klemmrollenfreilauf mit Aufsicht auf das Löserad.

Der Klemmrollenfreilauf hat ein Ritzel 20, das auf einer Ausgangswelle 21 sitzt und um eine Drehachse 22 drehbar ist. Im montierten Zustand des Klemmrollenfreilaufs ragt dieses Ritzel 20 frei an einer Seite vor. Das Ritzel 20 ist über einen Kragenbereich mit einem Keilwellenprofil 24 verbunden. Es hat an seinem anderen Endbereich einen Stummel, an dem Befestigungsmittel angebracht werden können, die den Klemmrollenfreilauf zusammenhalten und schließen. Mit dem Kragenbereich ist ein Gehäuse 26 in Kontakt und kann sich mit einem Lagerbereich um den Kragenbereich drehen.

Das Gehäuse 26 hat eine zylindrische Innenfläche 28, die zentrisch zur Achse 22 ist. Das Gehäuse 26 ist topfförmig, es ist in Richtung abgewandt vom Ritzel 20 offen. In den offenen Raum des Gehäuses 26 passt ein Klemmelement 30. Es hat ein Loch, das dem Keilwellenprofil 24 angepasst ist, so dass das Klemmelement 30 drehfest mit dem Ritzel 20 und damit der Ausgangswelle 21 verbunden ist. Das Klemmelement 30 hat die Form einer Lochscheibe. An seiner radialen Außenfläche hat es eine Anzahl n von V-förmigen Anordnungen 32. Diese haben jeweils eine linke und eine rechte Klemmschräge. Die V-förmige Anordnung 32 ist jeweils symmetrisch zu einer Radialen. Die radiale Außenfläche des Klemmelements wird auch als der Innenfläche 28 gegenüberliegende Seite bezeichnet.

Der Klemmrollenfreilauf hat insgesamt n Rollen 34, die n/2 Rollenpaare bilden. Jeder V-förmigen Anordnung 32 ist eine Rolle 34 zugeordnet. Im Normalzustand bzw. Ausgangszustand befinden sich die Rollen 34 eines Rollenpaars auf den voneinander entfernten Klemmschrägen ihrer V-förmigen Anordnungen 32. Diese Klemmschrägen werden im Folgenden äußere Klemmschrägen genannt. Die Rollen 34 haben im Ausgangszustand daher nicht Kontakt mit benachbarten Klemmschrägen der V-förmigen Anordnungen 32 eines Rollenpaars. Diese Klemmschrägen werden im Folgenden innere Klemmschrägen genannt.

In einer bevorzugten Ausführung verlaufen die beiden V-förmigen Anordnungen 32 mit jeweils einer äußeren und jeweils einer inneren Klemmschräge in Form eines W.

Der Klemmrollenfreilauf weist weiterhin einen Käfig 40 auf. Er hat einen scheibenförmigen Grundkörper. Von diesem springen in axialer Richtung Mitnehmer 42 vor. Sie greifen zwischen Paare der Rollen 34. Zwischen zwei Mitnehmern 42 ist jeweils ein Distanzelement 44 vorgesehen, das in gleicher Richtung wie die Mitnehmer 42 von der Scheibe vorspringt. Es befindet sich zwischen den beiden Rollen 34 eines Rollenpaars. Die Mitnehmer 42 bilden in Umfangsrichtung mindestens eine Anlagefläche 43 aus. An einer Anlagefläche 43 liegt jeweils eine Rolle 34 an.

Auf der anderen Seite des scheibenförmigen Grundkörpers des Käfigs 40 springen Zapfen 46 vor. Der Käfig 40 hat ein zentrales Loch, mit dem er drehbar das Keilwellenprofil umgreift.

Außerhalb des Käfigs 40, gesehen vom Ritzel 20, befindet sich ein Löserad 50. Es hat eine Außenverzahnung, über die ein Drehmoment in das Löserad 50 eingebracht werden kann, beispielsweise mittels eines Antriebs, wie er aus der eingangs genannten Art bekannt ist. Das Löserad 50 ist scheibenförmig. Es hat eine zentrale Öffnung, die zusammen mit den Keilwellenprofil 24 eine Übertragungseinrichtung bildet. Diese Übertragungseinrichtung hat einen Übertragungsfreiwinkel, auf den später noch eingegangen wird. Das Löserad hat Fenster 52, in die die Zapfen 46 eingreifen. Zapfen 46 und Fenster 52 bilden zusammen eine Mitnehmereinrichtung. Diese hat einen Mitnehmerfreiwinkel a.

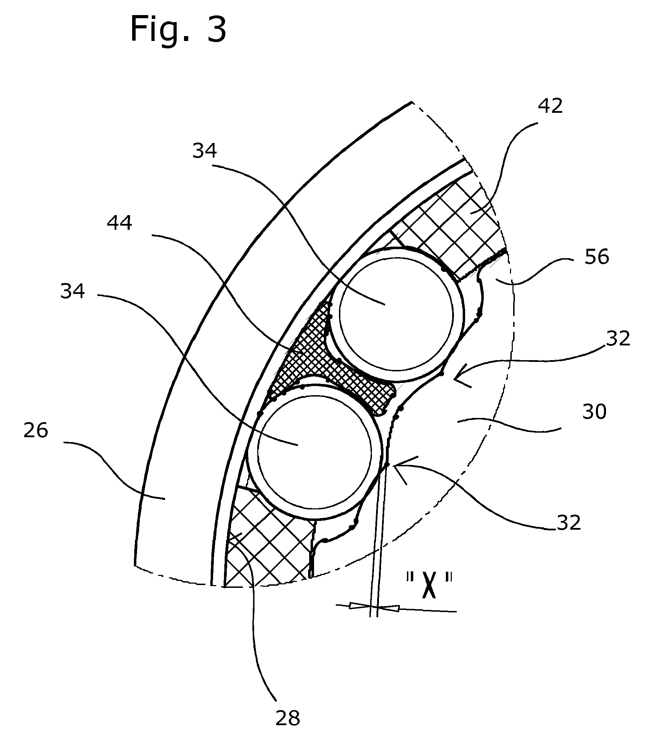

Figur 3 zeigt den Ausgangszustand. Im Ausgangszustand liegt jede der beiden Rollen des betrachteten Rollenpaars an der äußeren Klemmschräge ihrer V-förmigen Anordnung 32 an. Der Abstand von der inneren Klemmschräge der zugehörigen V-förmigen Anordnung 32 beträgt X. Die beiden V-förmigen Anordnungen 32 des Rollenpaars haben gemeinsam einen W-förmigen Verlauf. Die äußeren Klemmschenkel verlaufen nach außen hin nicht gradlinig, sondern gehen von einer anfänglichen Steigung im Verbindungspunkt der beiden Klemmschrägen einer V-förmigen Anordnung nach außen in eine flachere Steigung über, so dass sie dort einen geringeren Winkel mit der Innenfläche 28, die radial gegenüberliegt, einschließen. Sie gehen noch weiter nach außen hin über in eine Anschlagflanke, die zu einem Vorsprung 56 gehört, der sich zwischen zwei Rollenpaaren befindet. Diese Anschlagflanke verläuft deutlich steiler als die Klemmflanken und begrenzt den möglichen Weg der Rollen 34.

In einer Alternative kann das Distanzelement entfallen, die Rollen 34 eines Rollenpaares haben dann unmittelbaren Kontakt. Aber auch im Falle eines unmittelbaren Kontaktes der beiden Rollen kann ein reduziertes Element anstelle des Distanzelementes 44 vorgesehen sein, das sich im Dreieck zwischen den beiden Rollen 34 des Paars und der Innenfläche 28 befindet und die Rollen 34 nach innen vorbelastet. Vorzugsweise sind die Anlageflächen 43 so ausgebildet, dass sie die Rollen radial nach innen vorbelasten bzw. drücken. Es ist gewünscht und vorteilhaft, dass die Rollen radial nach innen vorbelastet sind.

Die beschriebene Mitnehmereinrichtung, die an der Übergangsstelle Löserad 50 und Käfig 40 vorliegt, und die Übertragungseinrichtung, die an Stelle des Übergangs Löserad 50 und Ritzel 20 vorliegt, ermöglichen die für die Klemmung erforderlichen Drehspiele. Ohne Drehspiele würde ein Antriebsmoment vom Ritzel 20 direkt über das Löserad 50 auf den Käfig 40 übertragen und die Rollen 34 gerieten außer Klemmung.

Dagegen ist beim Betätigen des Klemmrollenfreilaufs ein Drehspiel aber eher unerwünscht, da es zu Verlusten im Abtrieb führt. Vorzugsweise wird nach einer Betätigung das Löserad 40 durch ein geringes Reibmoment festgehalten, so dass bei einem erneuten Betätigen in der gleichen Verstellrichtung das Spiel nahezu Null ist und Verluste weitestgehend vermieden werden. Erst wenn beim Betätigen ein Richtungswechsel erfolgt, muss das Drehspiel einmal vollständig überbrückt werden, bevor ein Antrieb erfolgen kann. Das Drehspiel ist durch den Umschaltwinkel gekennzeichnet und beträgt beispielsweise 4,5°.

Je nach Belastungszustand und Betätigungsrichtung des Klemmrollenfreilaufs werden entweder die Rollen 34 über den Käfig 40 oder das Ritzel 20 zuerst vom Löserad 50 mitgenommen. Daher könnten die oben beschriebenen Drehspiele von der konstruktiven Auslegung gleiche Beträge haben. Vorzugsweise ist aber die Abstimmung so, dass zuerst die Rollen 34 mitgenommen werden. Im umgekehrten Falle würde ein Hakeln entstehen können, da das Ritzel 20 mit dem Klemmelement 30 drehfest verbunden ist. Da sich die Rollenpaare jeweils in einer Vorzugslage befinden, nämlich auf der äußeren Klemmschräge, und beim Betätigen über den Käfig 40 nur das Auflaufen der Rollen 34 auf die äußeren Klemmschrägen vermieden wird, hält das Distanzelement 44 im Normalfall die Rollen 34 von den inneren Klemmschrägen fern, siehe Abstand X. Gleichzeitig erfolgt über das Distanzelement 44 auch der Vorschub der zweiten Rolle des Rollenpaars, wenn die erste Rolle vom Käfig 40 verschoben wird.

Das Distanzelement 44 kann elastisch, starr oder sowohl elastisch als auch starr sein. Vorzugsweise ist das Distanzelement 44 an der Stelle starr, die den Mittelpunkt der beiden Rollen 34 das Rollenpaar verbindet. Dadurch ist der Abstand zwischen den Rollen des Rollenpaares gesichert. Ansonsten kann das Distanzelement 44 vorzugsweise elastisch sein, beispielsweise im Dreiecksbereich zwischen den beiden Rollen des Rollenpaares und der Innenfläche 28.

Der Freilaufwinkel a und/oder der Übertragungsfreiwinkel b liegen im Bereich 2° bis 10°, insbesondere bei etwa 5°.

Ein typischer Funktionsablauf ist wie folgt: Greift am Ritzel 20 ein Drehmoment an und wird das Ritzel 20 gegenüber dem festgehaltenen Gehäuse 26 gedreht, so befindet sich nach ungefähr 2° Ritzeldrehung die jeweils in der Drehrichtung klemmende Rolle 34 des Rollenpaars ungefähr 1° in Klemmung. Die zweite Rolle 34 des jeweiligen Rollenpaares gerät über den Käfig 40 ebenfalls in Klemmung. Nach 2,5° Ritzeldrehung wird das Löserad 50 vom Ritzel 20 mitgenommen. Nach weiteren 2,5° Drehung läuft das Löserad 50 gegen die Zapfen 46 des Käfigs 40. Nach 7° Ritzeldrehung kommen die in der Drehrichtung ursprünglich klemmenden Rollen gegen den jeweiligen Vorsprung 56.

Die Zeichnung in Figur 3 ist maßstäblich. Die einzelnen Abmessungen können dadurch aus ihr entnommen und dadurch bestimmt werden, dass die Rollen 34 einen Durchmesser von 5 mm haben. Auf diese Weise kann auch das Maß X ermittelt werden.

Der Klemmrollenfreilauf für eine Verstellvorrichtung in einem Kraftfahrzeug, insbesondere in einem Kraftfahrzeugsitz, weist auf:
- ein Gehäuse 26,
- eine Zylinderfläche, die eine Achse definiert und die entweder von einer zylindrischen Innenfläche 28 des Gehäuses 26 oder einer zylindrischen Mantelfläche eines Lagerrings gebildet ist,
- mindestens eine Rolle 34, wobei die Rolle 34 in Kontakt mit der Zylinderfläche kommt,
- eine Ausgangswelle 21, die zentrisch zur Achse 22 ist,
- eine Klemmkontur, die in Kontakt mit der Rolle 34 kommt, die sich auf der der Zylinderfläche gegenüberliegenden Seite der Rolle 34 befindet und mit der Ausgangswelle 21 drehverbunden ist,
   dabei ist die Klemmkontur eine Doppel-Klemmkontur, die eine linke Klemmschräge und eine rechte Klemmschräge aufweist.

Der Klemmrollenfreilauf für eine Verstellvorrichtung in einem Kraftfahrzeug, insbesondere in einem Kraftfahrzeugsitz, weist auf:
- ein Gehäuse 26, das eine zylindrische Innenfläche 28 hat, die eine Achse 22 definiert,
- mindestens ein Rollenpaar, das zwei Rollen 34 aufweist, wobei die Rollen 34 sich in Kontakt mit der Innenfläche 28 befinden,
- eine Ausgangswelle 21, die zentrisch zur Achse 22 ist,
- ein Klemmelement 30, das sich auf der der Innenfläche 28 gegenüberliegenden Seite der Rollen 34 befindet und das mit der Ausgangswelle 21 drehverbunden ist,
- dadurch gekennzeichnet, dass der Klemmrollenfreilauf weiterhin einen Käfig 40 aufweist, der in Umfangsrichtung für jede Rolle 34 mindestens jeweils eine Anlagefläche 43 aufweist, an der eine Rolle 34 anliegt, und dass das Klemmelement 30 für jede Rolle 34 eine V-förmige Anordnung 32 mit einer linken Klemmschräge einer rechten Klemmschräge aufweist.

## Patentansprüche

1. Klemmrollenfreilauf für eine Verstelleinrichtung in einem Kraftfahrzeug, insbesondere in einem Kraftfahrzeugsitz, der Klemmrollenfreilauf weist auf:
- ein Gehäuse (26) oder ein Lagerring, welche eine zylindrische Mantelfläche (28) haben, die eine Achse (22) definiert,
- mindestens eine Rolle (34),
- eine Ausgangswelle (21), die zentrisch zur Achse (22) ist,
- eine Klemmkontur, die sich auf der der zylindrischen Mantelfläche (28) gegenüberliegenden Seite der Rolle (34) befindet und über das Gehäuse oder den Lagerring mit der Ausgangswelle (21) drehverbunden ist, wobei es sich bei der Klemmkontur um eine Doppelklemmkontur handelt, wobei die zumindest eine Rolle (34) der Doppelklemmkontur zugeordnet ist und die Doppelklemmkontur einen linken und rechten Klemmbereich aufweist, wobei durch das Zusammenwirken der zumindest einen Rolle (34) mit dem linken oder rechten Klemmbereich, je nach Drehrichtung, und der zylindrischen Mantelfläche (28) Klemmung entsteht,
**dadurch gekennzeichnet, dass** der Klemmrollenfreilauf mindestens ein Rollenpaar mit zwei Rollen (34) aufweist, wobei jeweils eine Rolle (34) des Rollenpaares in einer Drehrichtung unmittelbar in Klemmung ist, die andere Rolle (34) bei gleicher Drehrichtung soeben nicht in Klemmung ist, was entweder durch direkte Anlage beider Rollen (34) aneinander bewirkt wird/oder durch ein Distanzelement (44) bewirkt wird, welches sich zwischen den Rollen (34) des Rollenpaares befindet.

2. Klemmrollenfreilauf nach Anspruch 1, **dadurch gekennzeichnet, dass** es sich bei der Doppelklemmkontur um eine V-förmige Anordnung (32) handelt.

3. Klemmrollenfreilauf nach Anspruch 2, **dadurch gekennzeichnet, dass** ein Spalt, der zwischen geradlinigen oder bogenförmigen Schenkeln der V-förmigen Anordnung und einer zylindrischen Außenfläche vorhanden ist, um so kleiner wird, je weiter das Tal der V-förmigen Anordnung verlassen wird.

4. Klemmrollenfreilauf nach einem der vorangegangenen Ansprüche, **dadurch gekennzeichnet, dass** der Klemmrollenfreilauf weiterhin einen Käfig aufweist, der in Umfangsrichtung für jede Rolle (34) mindestens eine Anlagefläche (43) aufweist an der bei Klemmung eine Rolle (34) anliegt.

5. Klemmrollenfreilauf nach Anspruch 3 oder 4, **dadurch gekennzeichnet, dass** ein Distanzelement (44) vorgesehen ist, dass sich zwischen den beiden Rollen (34) des Rollenpaares befindet, und dass das Distanzelement (44) als separates, nicht mit dem Käfig (40) verbundenes Element oder als mit dem Käfig (40) verbundenes Element ausgebildet ist.

6. Klemmrollenfreilauf nach einem der vorangegangenen Ansprüche 3 bis 5, **dadurch gekennzeichnet, dass** das Distanzelement (44) entweder starr ist oder neben starren auch elast ische Bereiche aufweist.

7. Klemmrollenfreilauf nach einem der vorangegangenen Ansprüche, **dadurch gekennzeichnet, dass** die Doppelklemmkontur eine V-förmige Anordnungen (32) aufweist, und dass zwei benachbarte V-förmige Anordnungen eines Rollenpaars gemeinsam eine W-förmige Anordnung bilden.

8. Klemmrollenfreilauf nach einem der vorangegangenen Ansprüche, **dadurch gekennzeichnet, dass** sich zwischen zwei benachbarten V-förmigen Anordnungen (32) unterschiedlicher Rollenpaare ein Vorsprung (56) befindet.

9. Klemmrollenfreilauf nach einem der Ansprüche 2 bis 8, **dadurch gekennzeichnet, dass** die Mitnehmereinrichtung einen freien Mitnehmerwinkel aufweist, dass die Übertragungseinrichtung einen freien Übertragungswinkel aufweist, und dass der freie Übertragungswinkel nicht kleiner ist als der freie Mitnehmerwinkel oder umgekehrt.

## Claims

1. A clamping-roller freewheel for an adjustment device in a motor vehicle, in particular in a motor vehicle seat, the clamping-roller freewheel comprising:
- a housing (26) or a bearing ring which have a cylindrical lateral surface (28) that defines an axis (22),
- at least one roller (34),
- an output shaft (21) that is central to the axis (22),
- a clamping contour which is located on the side of the roller (34) opposite from the cylindrical lateral surface (28) and is rotationally connected to the output shaft (21) via the housing or the bearing ring, wherein the clamping contour is a double clamping contour, wherein the at least one roller (34) is allocated to the double clamping contour and the double clamping contour has a left and a right clamping area, wherein a clamping action arises due to the cooperation of the at least one roller (34) with the left or right clamping area, depending on the direction of rotation, and the cylindrical lateral surface (28),
**characterized in that** the clamping-roller freewheel comprises at least one pair of rollers with two rollers (34), wherein one roller (34), respectively, of the pair of rollers is directly clamped in one direction of rotation, the other roller (34), given the same direction of rotation, is just about not clamped, which is either caused by the direct contact of both rollers (34) with each other or is caused by a spacer element (44) located between the rollers (34) of the roller pair.

2. The clamping-roller freewheel according to claim 1, **characterized in that** the double clamping contour is a V-shaped arrangement (32).

3. The clamping-roller freewheel according to claim 2, **characterized in that** a gap, which is present between the straight or arcuate legs of the V-shaped arrangement and a cylindrical outer surface, becomes the smaller the more the valley of the V-shaped arrangement is left behind.

4. The clamping-roller freewheel according to any one of the preceding claims, **characterized in that** the clamping-roller freewheel further comprises a cage, which comprises, in the circumferential direction, at least one contact surface (43) for each roller (34), against which a roller (34) rests in the case of clamping.

5. The clamping-roller freewheel according to claim 3 or 4, **characterized in that** a spacer element (44) is provided which is located between the two rollers (34) of a pair of rollers, and that the spacer element (44) is configured as a separate element that is not connected to the cage (40) or as an element that is connected to the cage (40).

6. The clamping-roller freewheel according to any one of the preceding claims 3 to 5, **characterized in that** the spacer element (44) is either rigid or that it comprises resilient areas in addition to rigid ones.

7. The clamping-roller freewheel according to any one of the preceding claims, **characterized in that** the double clamping contour comprises a V-shaped arrangement (32), and that preferably two adjacent V-shaped arrangements of a pair of rollers together form a W-shaped arrangement.

8. The clamping-roller freewheel according to any one of the preceding claims, **characterized in that** a protrusion (56) is located between two adjacent V-shaped arrangements (32) of different pairs of rollers.

9. The clamping-roller freewheel according to any one of the claims 2 to 8, **characterized in that** the tappet device has a free tappet angle, that the transmission device has a free transmission angle, and that the free transmission angle is no smaller than the free tappet angle or vice versa.

## Revendications

1. Roue libre à galets de serrage pour un dispositif de réglage dans un véhicule automobile, en particulier dans un siège de véhicule automobile, ladite roue libre à galets de serrage comprenant:
- un boîtier (26) ou une bague de palier qui ont une surface latérale cylindrique (28) qui définit un axe (22),
- au moins un galet (34),
- un arbre de sortie (21) qui est centré par rapport à l'axe (22),
- un contour de serrage qui se trouve sur la face du galet (34) située en regard de la surface latérale cylindrique (28) et qui est relié à rotation, via ledit boîtier ou la bague de palier, à l'arbre de sortie (21), ledit contour de serrage étant un double contour de serrage, ledit au moins un galet (34) étant associé au double contour de serrage, et le double contour de serrage présentant des zones de serrage gauche et droite, un serrage étant provoqué par la coopération dudit au moins un galet (34) avec la zone de serrage gauche ou droite, selon le sens de rotation, et la surface latérale cylindrique (28),
**caractérisée par le fait que** la roue libre à galets de serrage présente au moins une paire de galets ayant deux galets (34), dans laquelle respectivement un galet (34) de la paire de galets est directement en serrage dans un sens de rotation, l'autre galet (34), dans le même sens de rotation, n'est pas en serrage à l'instant, ce qui, soit, est provoqué par l'appui direct des deux galets (34) l'un contre l'autre / soit est provoqué par un élément d'écartement (44) qui se trouve entre les galets (34) de la paire de galets.

2. Roue libre à galets de serrage selon la revendication 1, **caractérisée par le fait que**, dans le cas du double contour de serrage, il s'agit d'un agencement en V (32).

3. Roue libre à galets de serrage selon la revendication 2, **caractérisée par le fait que**, plus on quitte la vallée de l'agencement en V, plus une fente qui existe entre des branches rectilignes ou en arc de l'agencement en V et une surface extérieure cylindrique devient petite.

4. Roue libre à galets de serrage selon l'une quelconque des revendications précédentes, **caractérisée par le fait que** la roue libre à galets de serrage comprend en outre une cage qui présente au moins une surface d'appui (43) pour chaque galet (34) dans la direction circonférentielle, sur laquelle s'appuie un galet (34) lors du serrage.

5. Roue libre à galets de serrage selon la revendication 3 ou 4, **caractérisée par le fait qu'**un élément d'écartement (44) est prévu qui se trouve entre les deux galets (34) de la paire de galets, et que ledit élément d'écartement (44) est réalisé en tant qu'élément séparé qui n'est pas relié à la cage (40) ou en tant qu'élément relié à la cage (40).

6. Roue libre à galets de serrage selon l'une quelconque des revendications précédentes 3 à 5, **caractérisée par le fait que** ledit élément d'écartement (44) soit est rigide soit présente, outre des zones rigides, également des zones élastiques.

7. Roue libre à galets de serrage selon l'une quelconque des revendications précédentes, **caractérisée par le fait que** le double contour de serrage présente un agencement en V (32) et que deux agencements en V voisins d'une paire de galets forment ensemble un agencement en W.

8. Roue libre à galets de serrage selon l'une quelconque des revendications précédentes, **caractérisée par le fait qu'**une projection (56) est située entre deux agencements en V (32) voisins de paires de galets différentes.

9. Roue libre à galets de serrage selon l'une quelconque des revendications 2 à 8, **caractérisée par le fait que** le dispositif d'entraînement présente un angle d'entraînement libre, que le dispositif de transmission présente un angle de transmission libre et que l'angle de transmission libre n'est pas inférieur audit angle d'entraînement libre, ou vice versa.
